Europäisches Patentamt

European Patent Office

Office européen des brevets

(11) Publication number: **0 180 211**
**A1**

## (12) EUROPEAN PATENT APPLICATION

(21) Application number: **85113800.8**

(22) Date of filing: **30.10.85**

(51) Int. Cl.⁴: **A 22 C 11/02**

(30) Priority: **01.11.84 US 667334**

(43) Date of publication of application: **07.05.86**
Bulletin **86/19**

(84) Designated Contracting States: **AT BE CH DE FR GB IT LI LU NL SE**

(71) Applicant: **UNION CARBIDE CORPORATION, 39 Old Ridgebury Road, Danbury Connecticut 06817 (US)**

(72) Inventor: **Beckman, John Heller, 135 Whitefawn Trail, Downers Grove Illinois 60516 (US)**

(74) Representative: **Eggert, Hans-Gunther, Dr., Räderscheidtstrasse 1, D-5000 Köln 41 (DE)**

(54) Composite shirred casing article with cored high density shirred casing and method of using same and production thereof.

(57) This invention relates to a composite shirred casing article comprised of at least two shirred casing lengths (21, 22), at least one of said lengths being a cored high density shirred casing length.

## COMPOSITE SHIRRED CASING ARTICLE WITH CORED HIGH DENSITY SHIRRED CASING AND METHOD OF USING SAME AND PRODUCTION THEREOF

### Field of the Invention

This invention relates generally to shirred casings, and, more specifically, to composite shirred casings wherein at least one casing in the composite is a cored high density casing, together with a method of production and use thereof.

### Background of the Invention

Composite shirred casing articles and methods of making them are known in the art. By way of illustration composite shirred casing articles and methods for their manufacture are disclosed in copending U.S. application Serial No. 431,469 and in German patent application publication DE 3012622A1, published October 8, 1981. As is pointed out in those patent applications, trade-offs inherent in combining competing properties in one casing can be circumvented by combining separately engineered casings; and it is not necessary to combine all properties in a single casing before stuffing. Rather, a multi-walled casing can be formed in a stuffing operation using a composite shirred casing article. The above-referenced applications teach that composite casings have enhanced overall physical properties by supplying such properties from more than one shirred source.

Cored high density shirred casings are a relatively new development in the shirred casing field. By way of illustration, copending U.S.

D-13,836

application Serial No. 363,851, incorporated herein by reference, discloses a cored high density shirred casing article comprising a tubular core with a shirred casing length mounted thereon and highly compacted on said core to a high pack ratio and high packing efficiency. Such a cored high density shirred casing provides a shirred casing stick having significantly greater stuffing length, improved structural stability and strength, and the added feature of rendering casings presently commercially available in given sizes adaptable for utilization on larger bore stuffing horns than thought possible up until the time of the invention disclosed in the referenced copending applications.

In the food industry, situations may arise where a single wall shirred casing stick may have to be replaced by a multiwall casing provided by utilizing tandem shirred casing sticks. In order to provide a multitude of diverse characteristics that a customer may require for an encased stuffed product casing, a single wall casing may not exist with a desired combination of qualities such as printability, color, barrier characteristics, stretch ability, shrink ability, and other needed features. However, under certain circumstances, as for example, utilizing two tandem fibrous casing sticks, each dimensionally similar and having a total combination of these features, a multiwall casing can be manufactured to satisfy the customer's needs. Nevertheless, there can be a disadvantage incurred when using conventional casings for a multiwall product, wherein the productive casing

D-13,836

stuffing time and the stuffed product length are decreased for a given production run.  These disadvantages may be overcome by providing cored high density stick embodiments disclosed by the present invention.

Furthermore, the use of cored high density shirred casing sticks can be adapted to eliminate the need for tension sleeves and can be utilized to replace stuffing horns such that a larger bore for stuffing is provided.  The increased volume of the stuffing horn can result in the advantage of less smearing on some products and can also result in less time required to stuff a particular length of product.  (Smearing is the breakdown of a meat emulsion which occurs under conditions of high surface shear during stuffing, which causes a layer of lighter areas (streaks), usually attributed to the displacement of fat, to appear on the surface of the encased stuffed product, and which gives the stuffed product a highly undesirable appearance).

Uncored products present the added disadvantage of requiring more unproductive time than cored products to replace used casing sticks. An uncored stick cannot slide as easily over a horn as a cored stick.  Additionally, damage to the casing that may occur when placing an uncored stick on a stuffing horn, is eliminated when using a cored high density shirred casing stick as taught by this invention, since the core protects the material of the stick along the stick bore.

When both shirred casing sticks in tandem are of the cored high density type, questions must

D-13,836

be resolved on how the casing from the rearmost stick can be positioned together with casing from the foremost stick to be end joined and stuffed. If the casing of the rearmost stick is not required to be reversed, the problem of positioning the unshirred ends of each stick together arises. If the casing of the rearmost stick is required to be reversed, different problems of positioning the unshirred ends of each stick together arise. If the casing of all tandem sticks is required to be reversed, even additional problems arise. The concepts of the instant invention deals effectively to solve all these problems, as further disclosed in this application.

<u>Object of the Invention</u>

It is an object of the present invention to provide a composite shirred casing article having at least one cored high density casing length, together with a method for the production and use thereof.

It is also an object of this invention to provide a composite shirred casing article having at least one cored high density casing length, together with a method for the production and use thereof, wherein stuffed product length and productive casing stuffing time for a given production run are increased.

It is furthermore an important object of this invention to provide a composite shirred casing article having at least one cored high density casing length, together with a method for production and use thereof which provide for easier handling,

D-13,836

less time required for stuffing, and a stuffed product of a more commercially appealing nature.

Still another object of this invention is to provide articles and methods for positioning the deshirred ends of tandem shirred sticks for joining to form a closed end after passing over sizing means so that common deshirring while stuffing is accomplished.

These and other objects will become apparent from a reading of the following detailed specification.

## Summary of the Invention

This invention relates, in one aspect, to a composite casing article comprising at least two shirred casing lengths. At least one of the lengths is a cored high density casing length. As used herein, the term "cored high density" or "CHD" casing is intended to designate that such casing is mounted on a tubular core and highly compacted on said core, preferably to a high pack ratio of at least about 100 and to a packing efficiency of at least about 0.50. The CHD casing may be compactly shirred on a mandrel, further compacted, and transferred to the core or compactly shirred directly on the core and further compacted thereon. As used herein, the term "pack ratio" designates the ratio of the original casing length to the length of the resulting shirred stick.

A CHD casing stick has pleats encircling the core wherein the pleats are longitudinally compacted so tightly that they exert radially inward forces on the core. The casing lengths have

D-13,836

internal bores of sufficient diameter to receive a stuffing horn, or have cores that may be adapted to be used as a stuffing horn. The foremost length hasan unshirred end of each other length passed through the bore thereof and positioned proximate an unshirred end of the foremost length. In this manner, all of the unshirred ends can be brought together for joining. The composite casing article is adapted to be tandem mounted on a stuffing horn, end joined, deshirred, and stuffed to form an encased product in a multi-layer composite casing.

In another aspect, the present invention relates to a method of manufacturing a stuffed food product comprising the steps of: placing at least two shirred casing lengths in tandem on a stuffing horn in such a way that the ends of the rearmost lengths are unshirred, passed through the bore of the foremost length, and end-joined with an unshirred end of the foremost length. One or both of the lengths is a cored high density casing length. Food product is stuffed into the joined casings to simultaneously deshirr the two shirred casing sticks and form a composite two layer casing. The rear of the stuffed casing is then enjoined to form a food product encased in a double layered casing. The casing is stretch sized to a predetermined diameter as it is being stuffed and the terminal ends are regulated to control their shape. In yet another aspect, the present invention relates to the stuffed food product made by the above-described method.

D-13,836

In still another aspect, the present invention relates to a method of manufacturing a composite casing article comprising the steps of providing two or more shirred casing lengths of different material and having different characteristics useful in a stuffing or processing operation for a food product. At least one of the casing lengths is a cored high density shirred casing length. The core is sufficiently rigid to resist deformation and reduction of the core bore size from the high casing inward expansion force. The method includes passing an unshirred end of one casing length through a bore of the other casing length for joining with an unshirred end of the other casing length, and arranging the casing lengths in tandem to form a common bore of sufficient diameter to receive a stuffing horn during a subsequent stuffing operation.

In still a further aspect of this invention, the core has, at one end, a conically shaped sizing member having a larger outer circumference than the interior circumference of the casing, whereby the casing is drawn over the sizing member in order to stretch the casing to its recommended stuffed circumference. The stretching action of the sizing member provides an additional holdback force to control or regulate internal stuffing pressure.

## Brief Description of the Drawings

Fig. 1 is a perspective view showing a shirred casing article exemplifying the present invention.

D-13,836

Fig. 2 is a sectional view taken along the line 2-2 of Fig. 1.

Fig. 3 is a fragmentary view showing a portion of a stuffing apparatus associated with a casing article of the present invention.

Figs. 3A-3E show sectional views of alternate embodiments of the article of the present invention.

## Detailed Description of the Invention

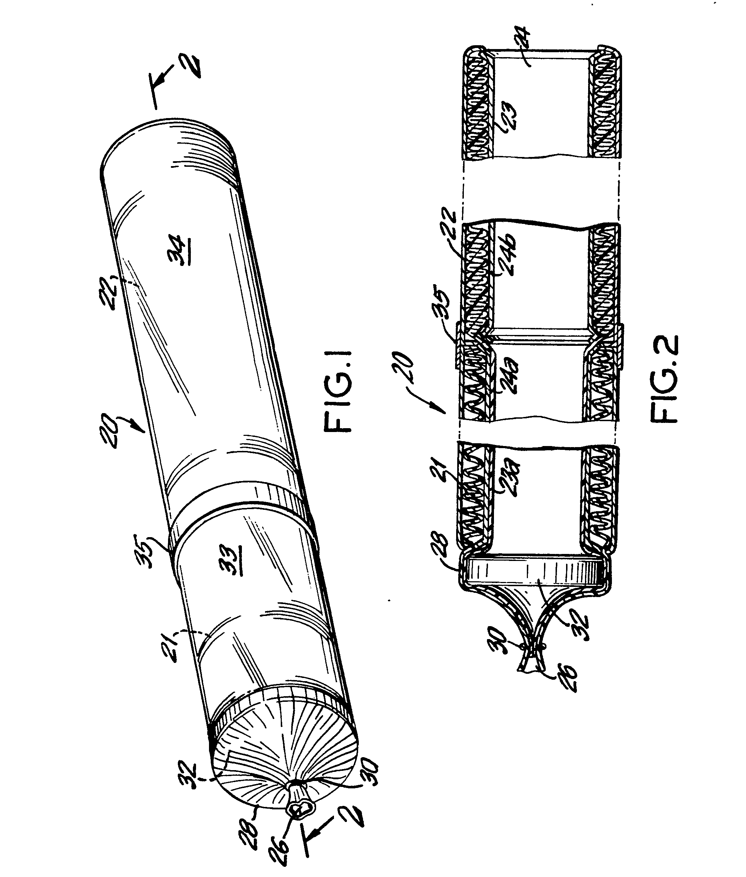

In the drawings, Figs. 1 and 2 show a shirred casing article 20 comprising shirred casing lengths 21, 22 (commonly known as shirred casing sticks), arranged in tandem to form a common in-line bore 24 of sufficient diameter to fit a stuffing horn of a stuffing apparatus. The shirred casing lengths 21, 22 are of different casing material intended to lend their respective properties to an encased product. The rear-most stick 22 is a cored high density stick mounted on a tubular core 23 and the foremost stick is a cored stick mounted on a tubular core 23a. Rear stick 22 has an end 26 unshirred and passed through the bore 24a of the foremost cored stick 21. The unshirred end 26 is arranged proximate an unshirred end 28 of the foremost stick 21 such that both ends are easily joined to form a unitary closed end for common deshirring when stuffing. In a preferred embodiment, the ends are joined and enclosed by a clip 30, although equivalent closures known to the art, such as a tie-knot of string can be used.

In the embodiment illustrated in Figs. 1 and 2, the casing article 20 includes an implanted

D-13,836

sizing disc 32 as described in Beckman U.S. Patent 4,007,761 and Kupcikevicius et al. U.S. Patent Re 30,265, both patents being incorporated herein by reference. Such a sizing disc preferably has a rim periphery greater than the circumference of the unshirred ends of both of the two casing lengths. As such, the illustrated article is adapted for use on the stuffing apparatus described in Kupcikevicius et al. U.S. Patent Re 30,390. While that embodiment of the stuffing apparatus is preferred due to the superior size control achieved thereby, it is also clear that the invention described and claimed herein is usable with many other forms of stuffing and sizing apparatus. Also, it is considered an important aspect of the present invention that the article of the present invention need not have a sizing disc as a part of the article itself.

For the purpose of protecting and maintaining the structural integrity of the shirred sticks 21 and 22, protective overwraps 33 and 34, cover the exterior of the shirred sticks 21 and 22, leaving the internal bores 24a, 24b free to receive a stuffing horn of a stuffing apparatus. When separate overwraps 33, 34 are used, they can be applied to the respective shirred casing sticks 21, 22 immediately after shirring. Conveniently, when the sticks are combined and arranged in tandem, means are provided for joining the overwraps 33, 34, such means being shown herein as a strip of tape 35 applied at the junction of the overwrap. As an equivalent construction, it may be desirable in some circumstances to apply a single overwrap to the tandem sticks after they are combined. Preferably, the overwrap is an elastic film, although netting or other equivalents are also usable.

There are instances where a customer may request printing or color characteristics that cannot be provided on a single wall of casing that has certain other inherent characteristics needed for stuffing a particular product. The lack of printability of a single wall casing having certain characteristics may preclude the possibility of providing the customer with what he wants. A particular color of casing that a customer wants may be precluded by the chemical constituency of a single wall casing needed for peelability, stretchability, shrinkability and other basic characteristics such as oxygen and moisture barrier characteristics. Thus, there are cases where the use of tandem shirred casings may be required to furnish the combination of characteristics a customer requires.

This may require two tandem shirred casing sticks of the same casing length albeit each has different chemical and physical characteristics. When two such conventional shirred sticks are used in tandem to provide desired characteristics, only half of the food product would be stuffed for the same horn length as compared with a single wall product from a single conventionally shirred casing stick, provided of course that the shirred casings all have the same compactness ratio. When each of the tandem shirred casing sticks is a cored high density shirred casing stick, however, the stuffed

D-13,836

product length for a particular production run on the same horn length is capable of being greater than the tandem conventionally shirred composite article.

For instance, a 24 inch casing stick of 4 mil thickness comprises 175 feet of casing. To provide certain required characteristics, a conventionally shirred 16 inch casing stick of 4 mil thickness having 125 feet of casing must be used in tandem with an 8 inch casing stick of 2 mil thickness on the same 24 inch horn length. The 2 mil thick casing would comprise a shirrable material with the same compactness capability as the 4 mil thick casing. Additionally, the 2 mil thick casing would be printable and capable of having color combinations that cannot be provided with the single wall casing. However, since the multiwall stuffed product would only be 125 feet in length, in order to overcome the 50 feet of stuffed product loss, CHD sticks may be used. By providing a 4 mil thick CHD stick 16 inches long having a casing length of 175 feet, and a 2 mil thick CHD stick 8 inches long having a casing length of 175 feet, the stuffed product length becomes at least equal to that provided when a conventional shirred single wall casing was used. Thus, the customer requirements for a special multiwall casing, such as a casing providing barrier characteristics against the transmission of oxygen and moisture, can be met without incurring any production disadvantage by using the concepts of the present invention.

D-13,836

As a further example, for a conventional tandem shirred composite fibrous casing, the rearmost casing length would be a size 4 regular fibrous casing of Union Carbide Corporation which would have an average flat width of about 4.44 inches and a recommended stuffed diameter of 3.26 inches. The foremost stick is configured to provide a moisture and oxygen barrier comprising a biaxially oriented polyvinylidene chloride film tube having a flat width of about 4.5 inches and a thickness of 1.2 mils to provide a recommended stuffed diameter of 3.26 inches. For a standard horn length of 24 inches, the length of the conventional rearmost stick of fibrous casing would be 17 inches with a casing length of 125 feet. The foremost stick of polyvinylidene chloride film would be 7 inches long with a casing length of 125 feet. The total length of the stuffed product using these conventional sticks in tandem would be 125 feet.

In comparison, a CHD stick of fibrous casing having a length of 17 inches with a 175 foot casing length can be used as the rearmost stick in tandem with a foremost conventional polyvinylidene chloride film stick having a length of 7 inches with a casing length of 175 feet on the same length of horn of 24 inches. The total stuffed product length using this combination in tandem would be 175 feet. Thus, the total stuffed product length, and therefore, the total stuffing time for a particular stuffing horn length, is greater when using the concept of this invention over conventionally tandem shirred casings.

D-13,836

It is presently contemplated in the preferred practice of the invention to provide a prepackaged casing article having sticks 21, 22 in tandem to form a common in-line bore. It may, however, prove desirable in certain circumstances for the casing manufacturer to ship the article constructed in accordance with the present invention with the stick elements 21, 22 in side-by-side rather than tandem relationship. In such a case, the rearmost casing stick has an end unshirred and passed through the bore of the foremost stick and disposed near an unshirred end of the foremost stick and joined thereto. Preferably, one article of this invention is provided with these ends clipped together as shown in Figs. 1 and 2. The so-combined stick elements, rather than being arranged in tandem, are then placed in side-by-side relationship in the shipping carton with the unshirred end of the rearmost stick within the bore of the foremost stick. At the packing house, the stuffing machine operator simply removes the joined casing sticks from the carton and places them in tandem on the stuffing horn.

Two methods can be used for manufacture of the casing article according to the present invention. The first and preferred method involves manufacture of the combined article by the casing manufacturer who is responsible for coordinating the properties of the respective casing elements (and sizing elements if present) to each other and to the requirements of the finished product. In practicing that method the casing manufacturer provides two

D-13,836

shirred casing sticks 20, 22, the sticks being made of different material and having different characteristics useful in stuffing or processing operation. As will be described in greater detail below, the dimension-related characteristics of the sticks are coordinated to each other and to the requirements of the stuffed food product. An unshirred end of one of the sticks 22 is passed through the bore 24a of the other stick 21 for joining with an unshirred end of the other stick 21. That operation can be conveniently formed on a mandrel having a length and diameter compatible with the casing article being manufactured. For articles using a sizing disc 32, after the fore end of the rearmost stick 22 is passed through the tubular core 23a and bore 24a of the foremost stick 21, the disc is inserted into the combined ends such that both unshirred ends pass over the disc. Preferably, the joined ends are then closed, such as by means of the clip 30. It is preferable, although not necessary, to keep the sticks in tandem for shipment, and in that situation, it is desirable to join the overwraps of the respective stick element by means of splice 35 or, in an alternate embodiment, not shown, by means of a continuous overwrap.

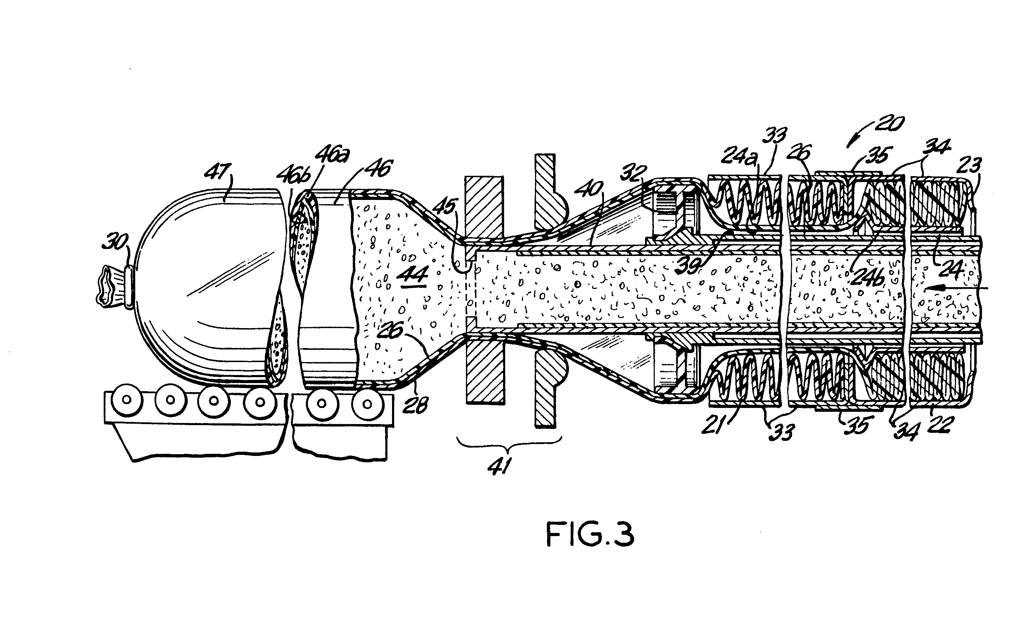

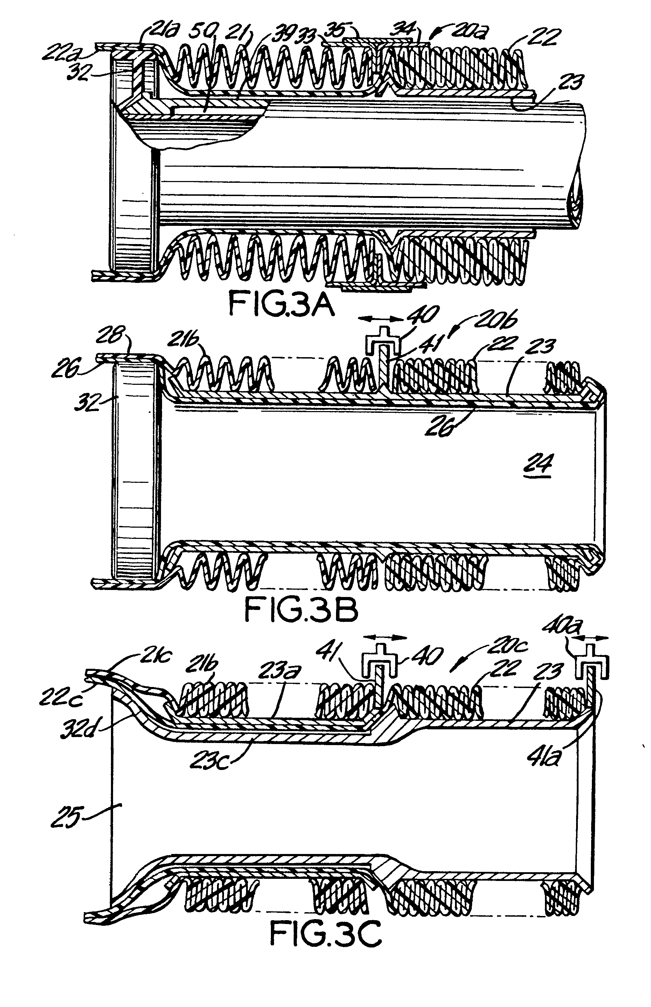

The second method of manufacture is capable of achieving only some of the advantages of the invention, but is useful where the packing house wishes to exercise direct control of the elements of the combined casing stick. The method contemplates assembly of the combined casing article on the stuffing horn of the stuffing apparatus. As such,

D-13,836

the user can achieve the product related advantages of the invention while foregoing some of the benefits of the preferred embodiments in simplifying and facilitating its use. In carrying out this second method of manufacturing the casing article, the packing house operator first places a cored high density shirred stick of casing on the end of the stuffing horn, with the core of the cored high density stick optionally acting as a stuffing horn extension as is shown in Fig. 3c. Further, in the embodiment illustrated in Fig. 3c, the core 23c includes an integral conical sizing member 32d at its fore end 25 as described in copending U.S. application Serial No. 495,332, all the teachings of which are incorporated herein by reference. Alternately, the core of the cored high density stick can replace the stuffing horn of the stuffing machine if the core is of sufficient length to support both sticks. An end of the cored high density stick is unshirred so that it can be passed through the bore of a second casing stick. To facilitate that operation, the operator can use the clipping device of the stuffing machine to clip the unshirred end of the cored high density stick so that the core, used as a stuffing horn, holds the clipped end extended. A second shirred stick (which may or may not be of the cored high density type) is then placed on the core, used as a stuffing horn, over the unshirred end of the first stick. An unshirred end of the second casing stick is joined with the unshirred end of the first, and the so-joined ends are clipped together. The details of

D-13,836

other operations performed in manufacturing the casing article, such as compacting or shirring respective stick elements, lubricating or pre-moisturizing the casing during shirring, overwrapping the elements or the combined article are all known to those skilled in the art and will not be further discussed, except as regards the cored high density stick.

It is noted, however, that lubrication with a lubricant such as mineral oil, normally applied in the shirring operation also serves a function in deshirring by reducing friction between the combined casing elements and the optional sizing disc. The quantity of 20 to 200 milligrams of mineral oil per 100 square inches of inside casing surface has been found to be suitable for most casings.

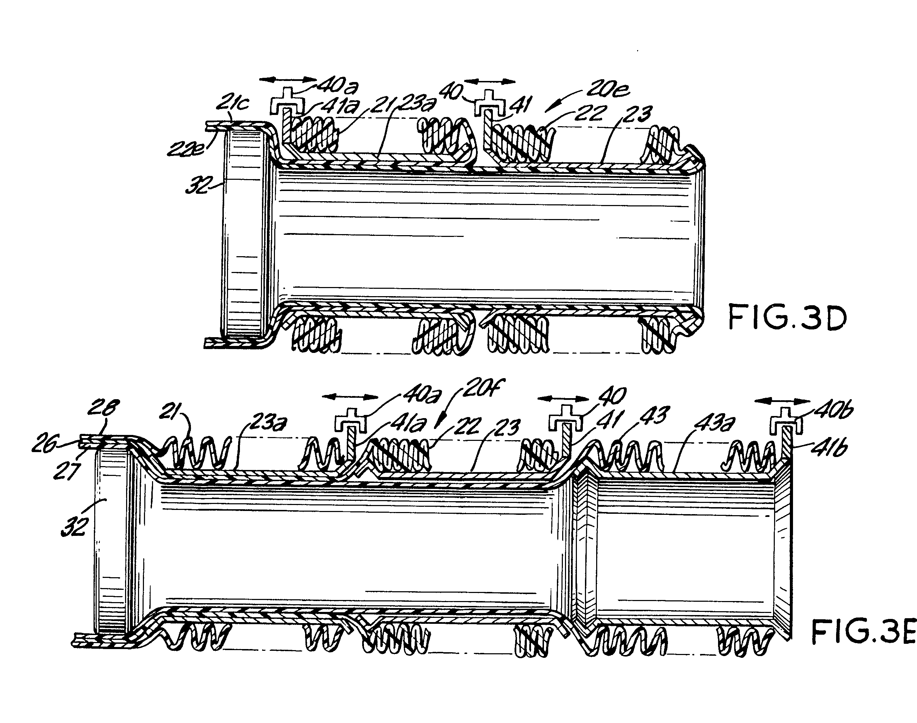

Referring to Fig. 3, there is shown a shirred casing article 20 of the type illustrated in Figs. 1 and 2 being stuffed to form an encased food product 47. A pair of shirred casing lengths 21, 22 are arranged in tandem on a stuffing horn 40 of a stuffing apparatus, a portion of which is schematically illustrated at 41. Rear casing length 22 is a cored high density casing length mounted on a tubular core 23. Apparatus and method for producing a stuffed food product and controlling the uniformity of stuffed diameter and conformation of the leading and trailing ends of a sausage product are taught in U.S. Patent Re. 30,390, reissued September 2, 1980. The reader is referred to the aforementioned U.S. Re 30,390 and also Frey, et al. U.S. Patent 4,077,090 if additional information is desired on the stuffing apparatus.

In the illustrated embodiment, an unshirred end 26 of the rearmost stick 22 is passed over the fore end of core 23 of the rearmost stick, and then through bore 24a of the foremost stick, and then arranged proximate an unshirred end 28 thereof of foremost stick 21. Prior to the stage illustrated in Fig. 3, the unshirred ends had been passed over the sizing disc 32 and clipped to form a unitary casing end. The unitary casing end is adapted to cause both casing lengths to deshirr upon stuffing.

As shown in Fig. 3, a stuffable food product 44 is being released from the discharge end 45 of the stuffing horn 40, thereby causing the filling of the composite casing 46. The casing is deshirred over the sizing disc 32 and when filled with food product 44 expands to a predetermined circumference. Typically, when the encased food product 47 is stuffed to the desired length, a pair of rear clips (not shown) similar to clip 30 is applied and the casing is then severed therebetween to form an encased food product ready for subsequent processing, with the clip applied to the unfilled end of the composite casing article then forming a unitary closed end for stuffing a subsequent food product 47.

The stuffed food product 47 is encased in a double-walled casing 46a, 46b, which composite casing was formed during the stuffing operation from casing elements 21, 22 of the casing article 20. As noted above, the materials from which the elements 21, 22 are made are different, each being designed for particular properties to be provided to the

D-13,836

encased product 47. Thus, the composite casing 46 has characteristics arising from the combination of the characteristics of the elements 21, 22 and these characteristics are combined in a way superior to prior attempts to achieve additional characteristics by coating, laminating, or the like.

More specifically, in practicing the present invention, the manufacturing operations for one of the elements, for example shirred length 21, are not complicated by the manufacturing operations for its intended partner element 22 because they are performed independently of each other. In contrast, in prior techniques which relied on coating, laminating, extruding, or the like, the multiple manufacturing operations were all performed on the same casings, often times requiring trade-offs in achieving the desired characteristics such that the composite manufactured article which resulted from the final step was often deficient in providing one or more of the desired properties. For example, if a fibrous casing is coated with some form of barrier coating, the coating limits the ability of the fibrous casing to be shirred without damaging the coating. Thus, even if the coating is reasonably continuous when applied, in many cases it is likely that subsequent activities, such as shirring, will create discontinuities.

According to the present invention, however, the manufacturing operation for the casing length 21 can be performed quite independently of any requirement for the casing length 22, allowing the end use characteristics of each to be optimized without complications arising from the other. The individually manufactured shirred casing lengths are then merged in the stuffing operation by simultaneously deshirring and stuffing two or more shirred casing elements mounted in tandem on a stuffing horn to produce an encased product with a tight, wrinkle-free composite casing. Each of the casing lengths provides its desired characteristics to the final encased product 47, resulting in a composite casing 46 having characteristics superior to those achievable heretofore.

At least one of the casing lengths employed in the article of the present invention is a cored high density length mounted on a tubular core and preferably highly compacted on said core to a high pack ratio of at least about 100 (more preferably at least about 120) and to a packing efficiency not less than 0.50 (more preferably not less than 0.60). The pack ratio and packing efficiency of the cored casing length are respectively greater than the pack ratio and the packing efficiency of the same casing length shirred and highly compacted under the same shirring and compacting conditions without said core. By virtue of these increases, high casing inward expansion forces are generated on said core. Thus, the core must be sufficiently rigid to resist deformation and reduction of the core bore size from the high casing inward expansion force. CHD casings are discussed in greater detail in U.S. application Serial No. 363,851, incorporated herein by reference.

The casing lengths are preferably arranged in tandem in a composite casing sales package article, whereby the bore of the non-cored casing length and the core of the cored casing length form a common bore of sufficient diameter to receive a stuffing horn.

One of the shirred casing lengths, namely either the cored casing length or the non-cored casing length has an end passed through the bore of the other. Both of the unshirred ends lend themselves to being brought together for being end joined, deshirred, and stuffed to form an encased product in a multi-layer composite casing.

In another aspect, the core of the cored casing length can itself act as a stuffing horn or stuffing horn extension, thereby avoiding the need to mount the cored casing length on a stuffing horn. In this embodiment, the full cross sectional area of the core can be utilized for stuffing purposes.

The use of a cored high density casing length in the composite casing article provides distinct advantages for the article, as compared to conventional multi-layer composite casing articles. If only one of the casing lengths in the composite article of the present invention is a cored high density casing length, then this cored casing length can be used to stuff as much as 40 percent more food product as compared to the amount that can be stuffed using conventional composite casing sticks of equal length. For a given production run, the

D-13,836

non-stuffing time for loading the casing onto the machine is reduced, and the productive casing stuffing time is increased.

Thus, when the non-cored casing length is exhausted, it can be replaced with another non-cored casing length, and perhaps a third casing length, before the equivalent casing supply on the cored casing length is necessarily exhausted. Alternately, where the non-cored casing is thinner than the cored casing, the non-cored casing length may be equal to the cored casing and, in this instance, stuffing may be continuous without the need to replace casing lengths until both tandem lengths have been exhausted.

If all casing lengths in the composite casing article are cored high density casing lengths on a simple core, an even greater advantage emerges. In this instance, it is possible to stuff-out as much as 60 percent more food product before replacing the composite article than was possible using conventional casing lengths. In addition, the core of the composite casing article can be used as the stuffing horn for stuffing purposes, thereby providing a reusable or throw-away stuffing horn. As shown in Fig. 3c, one stick is a cored high density shirred stick namely 22, and 21b is a cored stick not necessarily of high density. While some of the characteristics of the respective casing lengths 21, 22 are designed to be compatible with particular stuffing, processing or storage requirements, additional characteristics might be matched so that the composite casing article 46

D-13,836

remains in tight wrinkle-free contact on the encased food product. Before describing those characteristics in particular embodiments, it is worthwhile to review some of those parameters. The parameters fall mainly into two groups, namely, dimension-related and product-related parameters.

The dimension-related parameters are intended to produce a wrinkle-free product, and encompass the properties of the casing elements 21, 22 which might be matched or coordinated in order to attain their goal. Such parameters include circumference, extensibility, and shrinkability or shrink-back.

Product-related parameters are numerous and depend upon the requirements of a particular end product and the process to which it is subjected. These are the characteristics which the respective elements 21, 22 of the composite casing article 20 are specially configured to achieve. For example, when one of the casing elements is a cellulosic casing, such as a fibrous casing, or a non-fibrous cellulose casing, the characteristics normally expected are reasonable strength and toughness, size control and tear-resistance. Non-cellulosic casings, such as those made from thermoplastic film, natural gut, and collagen, can be formulated to achieve other desired properties. For example, polyvinylidene chloride films can be formulated to cause the plastic film to serve as an oxygen barrier, a moisture barrier, or both.

Polyvinylidene Chloride (PVDC) is the term which refers to a family of polymers of vinylidene

D-13,836

chloride, said polymers having thermal stability and impermeability to gases and vapors. Polyvinylidene Chloride materials which are in commercial use today are actually vinylidene chloride copolymer films. If used as an oxygen barrier, a vinylidene chloride copolymer preferably has an oxygen transmission rate of less than 8cc per 100 inches squared per 24 hours per atmosphere. In addition, non-cellulosic casings, such as those made from vinylidene chloride copolymer film, can be treated to provide the film with the property of increased adhesion for the film surface which is in contact with the adjacent stuffed food product, in order to thereby avoid the formation of gelatin and fat at the surface of the stuffed food product. In another aspect, multi-ply films can be made using two or more copolymers such as vinylidene chloride copolymer and ethylene vinyl acetate copolymer.

The relative location of the casing layers is also suited to the requirements of the product. For example, if a moisture barrier is disposed outside a fibrous layer, the composite casing will have sufficient extensibility to stretch during stuffing and cooking, but shrink-back will be limited primarily to recoverable elasticity, such that the casing will not shrink significantly below the stuffed green diameter. If it is desired to utilize the syneresis properties of the fibrous casing to shrink due to casing moisture loss, the casing layers should be arranged with no moisture barrier outside the fibrous casing. Similarly, if it is desired to protect the fibrous casing from

D-13,836

extreme moisture loss during operations such as blast freezing, a moisture barrier layer should be disposed outside the fibrous casing layer. Likewise, fibrous casings positioned to be in contact with the stuffed food product are often required to have good peelability characteristics.

In a preferred aspect of the present invention, the casing lengths are of respective predetermined circumference and are so constructed and arranged so as to have extensibility and shrink-back properties coordinated to the circumference of the product during stuffing and processing, so that the composite casing is in close wrinkle-free contact on the stuffed processed product.

Figures 3A to 3E show sectional views of various preferred embodiments of the article of the present invention. Figure 3A shows a casing article 20a mounted on stuffing horn 40 (partially shown in section). Rear casing length 22 is a cored high density casing length mounted on tubular core 23. Front casing length 21 is attached to rear casing length 22 by means of tape 35 which joins plastic film overwraps 33, 34. The foremost length 22a of rear casing length 22 is unshirred and is shown passed through the bore of front casing length 21 and positioned proximate an unshirred length 21a of front casing length 21. Unshirred lengths 21a and 22a are shown stretched over sizing disc 32. Sizing disc 32 is mounted on tension sleeve 39 which, in turn, rides on stuffing horn 40.

D-13,836

Figure 3B shows a casing article 20b with front casing length 21b and rear casing length 22, rear casing length 22 being a cored high density shirred casing length. If the casing of the rearmost stick 22 is required to be reversed before joining with the casing of the foremost stick 21b, this problem is solved by deshirring casing from the rear of the rearmost stick 22 and passing this casing through a continuous core 23 for both CHD sticks, and joining the rearmost unshirred end 26 with the unshirred end 28 of the foremost stick. Front casing length 21b and rear casing length 22 are both mounted in tandem on the same, continuous tubular core 23. The rear stick 22 has its rear unshirred end 26 passed through the bore 24 of the tubular core 23 such that the casing is inverted; i.e., turned inside-out during deshirring. The unshirred end 26 is arranged proximate an unshirred end 28 of the foremost stick such that both ends are easily joined to form a unitary closed end (not shown) after being stretched over sizing means 32 for common deshirring while stuffing. Tension control 40 eliminates the need for tension sleeve 39 of Fig. 3, thereby allowing for a larger diameter stuffing horn. As is well known in the art, providing a larger diameter stuffing horn can result in eliminating smear in some products, such as emulsion products (bologna) and especially coarse ground products (salami). The increased diameter of the stuffing horn also results in less time required to stuff a particular length of product, thus yielding greater productivity. The core structure 23 has extension means 41 adapted to be operated cooperatively by the apparatus tension control 40, which indexes core 23 back and forth, as shown by the double arrow, to provide further casing holdback during stuffing, to control stuffed casing diameter, and to provide slack for the leading and trailing ends of the casing to control the shape of leading and/or trailing ends of a stuffed casing product. During deshirring, wherein a forward thrust is applied to the core 23, tension control means 40, by engaging core extension 41, prevents core 23 from being jammed into the sizing means 32.

Figure 3C shows a casing article 20c with front casing length 21b and rear casing length 22 both being cored high density shirred casing lengths mounted on the same, continuous core 23. When the casing of the rearmost stick 22 is not required to be reversed, a break in the core 23 is provided. This is accomplished, as illustrated, by supplying the front casing length 21b shirred on core segment 23a which is mounted on portion 23c of core 23. Deshirred end 22c at the fore end of the rearmost portion 23 is passed through and under the core segment 23a of the foremost stick 21b. Front casing length 21b is mounted on tubular core 23a, whereas rear casing length 22 is mounted on tubular core 23. Tubular core 23 functions as a disposable stuffing horn, inasmuch as that core supports both front casing length 21b and rear casing length 22, and it can act as a conduit for stuffable food product flow through these casing lengths. Front casing length 21b is attached to rear casing length

D-13,836

22 by means of tape 35 which joins overwraps 33 and 34. The foremost length 22c of rear casing length 22 is unshirred and passed through core 23a of front casing length 21b and positioned proximate an unshirred length 21c of front casing length 21b. Unshirred lengths 21c and 22c are shown stretched over conical sizing means 32d which is an integral portion of the structure of core 23. The sizing means is provided by extending and flaring the forward end of core portion 23c, thus producing sizing means 32d. The diameter of tubular core 23 is shown larger at the rearward end than the diameter of the portion 23c; however, both diameters may be equal to provide a bore such as shown for core 23 of Fig. 3B. Although not shown in Fig. 3B, the forward end of continuous core 23 could be extended and flared to provide sizing means as an alternate to sizing means 32 and equivalent to sizing means 32d in Fig. 3c.

In Fig. 3C, the core structure 23a has extension means 41 adapted to be operated cooperatively by the apparatus tension control 40, and the core structure 23 has extension means 41a adapted to be operated cooperatively by the apparatus tension control 40a, to provide further casing holdback force by imposing a predetermined holdback tension on all casing being deshirred during stuffing, to control stuffed casing diameter, and to provide slack for the leading and trailing ends of the casing to control the shape of the leading and/or trailing end of the stuffed casing product. Although not shown, and not preferred, the

D-13,836

core may be extended and provided with a sizing element 32, as shown in Fig. 3B. In this case, the core 23 could be used as a stuffing horn. When an apparatus stuffing horn 50, as shown in Fig. 3A, is provided for the article shown in Fig. 3C, the core 23 of Fig. 3C need not be extended for supporting a sizing element, and sizing means can be mounted on the stuffing horn provided.

Figure 3D shows a casing article 20e that is similar to article 20 of Figure 2, except that in Figure 3D, both the foremost casing length 21 and the rearmost casing length 22 require to be reversed. The unshirred length 22e passes from the rearmost portion of rear casing length 22. In contrast, foremost length 22a of rear length 22 of Figure 3A passes from the foremost portion of rear casing 22. In the embodiment of Fig. 3D, casing length 22 will be turned inside-out as it is deshirred from the aft end and passed through the bore of core 23. Also, casing 21 would be deshirred from its aft end to turn it inside out. Tension control 40 of the apparatus is shown to operate cooperatively with extension means 41 of the foremost portion of core 23 controlling the casing 22 tension and slack, whereas, tension control 40a is shown to operate cooperatively with extension means 41a of the foremost portion of core 23a controlling the casing 21 tension and slack. Unshirred lengths 21c and 22e are shown stretched over sizing means 32.

Fig. 3E shows a casing article 20f that has cored sticks 21 and 22 in tandem similar to article

D-13,836

20 of Fig. 2. Additionally however, a third cored casing stick 43 similar to sticks 21 and 22 is placed in tandem at the rearmost position with sticks 21 and 22. Cored rearmost stick 43 has its foremost end 27 unshirred and passed through the bore 23 of the center cored stick 22 and further through the core 23a of the foremost cored stick 21. The unshirred end 27 is arranged proximate the unshirred ends 28 and 26 of the foremost stick 21 and the center stick 22, respectively, such that the three ends are joined to form a unitary closed end for common deshirring of a three wall casing when stuffing. It is evident, that additional casing sticks can be added in tandem to produce casings when stuffing with as many walls as desired. Tension controls 40, 40a, and 40b operate cooperatively with respective core extension means 41, 41a, and 41b to control tension and slack for their respective casings.

While this invention has been described with reference to certain specific embodiments, it will be recognized by those skilled in this art that many variations are possible without departing from the scope and spirit of the invention, and that it is intended to cover all changes and modifications of the invention, disclosed herein for the purpose of illustration, which do not constitute departure from the spirit and scope of the invention. For example, if desired, the cored high density casing length(s) of the composite casing article of the present invention can be replaced with a non-CHD length(s). In this embodiment, the cored casing

D-13,836

length(s) would use a conventional shirred stick(s), and would not provide the compactness advantages associated with compact casing on a CHD length. Other embodiments will be readily apparent to those skilled in this art upon reading the instant specification.

D-13,836

## CLAIMS

1. A composite casing article comprising at least two shirred casing lengths, at least one of said casing lengths being a cored high density shirred casing length, at least one of said lengths being a foremost length having an unshirred end of each other length passed through the bore thereof and positioned proximate to an unshirred end of the foremost length so that all of said unshirred ends can be brought together for joining, whereby said composite casing article is adapted to be end joined, deshirred, and stuffed to form an encased product in a multi-layer composite casing.

2. A composite casing article comprising at least two shirred casing lengths, at least one of said casing lengths being a cored high density shirred casing length, and said shirred casing lengths having an internal bore of sufficient diameter to receive a stuffing horn, one of said lengths being a foremost length having an unshirred end of each other length passed through the bore thereof and positioned proximate an unshirred end of the foremost length so that all of said unshirred ends can be brought together for joining, whereby said composite casing article is adapted to be tandem mounted on a stuffing horn, end joined, deshirred, and stuffed to form an encased product in a multi-layer composite casing.

3. A composite casing article comprising first and second shirred casing lengths formed of

D-13,836

different materials, at least one of said casing lengths being a cored high density shirred casing length, said casing lengths having an internal bore of sufficient diameter to receive a stuffing horn, one of the shirred lengths having an end unshirred and passed through the bore of the other, the unshirred end being proximate an unshirred end of said other shirred length and positioned for ready attachment thereto to form a composite casing article for simultaneous deshirring upon stuffing.

4.   The casing article claimed in claim 1 wherein said unshirred ends are joined together to form a closed unitary casing and are thereby adapted to cause all casing lengths to deshirr upon stuffing.

5.   The casing article of claim 1 which additionally includes sizing means implanted within the unshirred casing ends proximate the joined ends.

6.   The casing article as set out in claim 1 wherein the sizing means has a rim periphery greater than the unstretched circumference of the unshirred ends of said shirred casing lengths.

7.   The casing article of any of claims 1 to 6 which additionally includes at least one core having extension means adapted to be cooperatively operated by tension control means of a stuffing machine.

8.   The casing article of any of claims 1 to 6 wherein the casing lengths are of respective predetermined circumference and are so constructed

D-13,836

and arranged so as to have extensibility and shrinkback properties coordinated to the circumference of the product during stuffing and processing, so that the multi-layer composite casing is in close wrinkle-free contact on the stuffed processed product.

9. The casing article as set out in any of claims 1 to 6 wherein at least one of said casing lengths is unshirred through its own bore before joining with the other unshirred end, whereby said one casing length is turned inside out when deshirred.

10. A composite casing article comprising first and second shirred casing lengths formed of different materials, at least one of said first and second lengths being a cored high density shirred casing length, said shirred casing lengths being arranged in tandem to form a common bore of sufficient diameter to receive a stuffing horn, one of the shirred lengths having an end unshirred and passed through the bore of the other, the unshirred end being proximate an unshirred end of said other shirred length and positioned for ready attachment thereto to form a composite casing article for simultaneous deshirring upon stuffing.

11. The casing article as set out in claim 10 wherein the unshirred ends are joined to form a closed unitary casing end adapted to cause both of said casing lengths to deshirr upon stuffing.

D-13,836

12. The casing article as set out in claims 10 or 11 wherein the casing lengths are of respective predetermined circumference and are so constructed and arranged as to have extensibility and shrink-back properties coordinated to the circumference of the product during stuffing and processing, so that the composite casing article produces a multi-layer composite casing which is in close wrinkle-free contact on the stuffed processed product.

13. The casing article as set out in claim 11 wherein at least one of said casing lengths is unshirred through its own bore before joining with the other unshirred end, whereby said one casing length is turned inside out when deshirred.

14. The casing article as set out in claim 11 which additionally includes sizing means implanted within the mated unshirred casing ends proximate the joined ends.

15. The casing article as set out in claim 14 wherein the sizing means has a rim periphery greater than the unstretched circumference of the unshirred ends of both of the two casing lengths.

16. The casing article as set out in any of claims 10, 11, 13, 14 and 15 which additionally includes at least one of said cores having extension means adapted to be cooperatively operated by tension control means of a stuffing machine.

D-13,836

17. The casing article as set out in any of claims 10, 11, 13, 14 and 15 wherein the casing lengths are of respective predetermined circumference and are so constructed and arranged as to have extensibility and shrink-back properties coordinated to the desired circumference of the ultimate encased product resulting from stuffing and processing, the sizing means having an outer periphery also coordinated to the circumference of the ultimate encased product, so that the casing lengths are in close wrinkle-free contact on the ultimate encased product.

18. A casing article comprising a cellulosic shirred length of casing, and a non-cellulosic length of casing arranged in tandem with the cellulosic length to form a common bore of sufficient diameter to receive a stuffing horn, at least one of said shirred casing lengths being a cored high density shirred casing length, one of the shirred lengths having an end unshirred and passed through the bore of the other, said other shirred length having an end unshirred and mated with the unshirred end of said one, and both said mated ends joined together for simultaneous deshirring and stuffing, the non-cellulosic casing having a property additional to those possessed by said cellulosic casing, thereby to produce an enhanced multi-layer casing on the encased stuffed product.

19. The casing article as set out in claim 18 wherein the non-cellulosic casing length is a tube exhibiting the additional property of adhesion

D-13,836

to a product to be stuffed, said tube being positioned to be adjacent the product when stuffed.

20. The casing article as set out in claim 18 wherein the non-cellulosic casing length is a thermoplastic film tube exhibiting the additional property of low oxygen permeability, thereby minimizing oxygen penetration to the stuffed product.

21. The casing article as set out in claim 18 wherein the non-cellulosic casing length is a thermoplastic film tube exhibiting the additional property of low moisture permeability, thereby minimizing moisture loss from the stuffed product.

22. The casing article as set out in claim 18 wherein the non-cellulose casing length is a polyvinylidene chloride film tube.

23. The casing article as set forth in claim 18 further including sizing means implanted within the mated unshirred casing ends proximate the joined ends, the sizing means having a rim periphery greater that the unstretched circumference of both of the two casings, the circumference and the stretch and shrink-back properties of the respective casing lengths being related to produce a multi-layer casing in close wrinkle-free contact on the stuffed processed product.

24. A composite shirred casing article intended to be stuffed with a food product and subsequently processed to produce a finished encased product, comprising two shirred casing lengths

D-13,836

formed of different materials having different properties, each casing length having a single ply or a plurality of plys, at least one of said casing lengths being a cored high density shirred casing length, the casing lengths being arranged in tandem with an unshirred end of one within the bore of the other and joined to an unshirred end of a second casing length for simultaneous deshirring upon stuffing, both casing lengths having sufficient extensibility to be stretched to the maximum desired circumference during stuffing and processing without rupture, both casing lengths also having sufficient shrinkability to stay in wrinkle-free contact on the encased product as it contracts during processing, thereby forming a finished encased product within a multi-layer composite casing, the elements of which are in intimate wrinkle-free contact on the finished encased product and each providing its own properties thereto.

25. The casing article as set out in claim 24 wherein one casing length is a vinylidene chloride copolymer film tube having a surface exposed for contact with the encased product, said surface providing the film with the property of adhesion to a food product during processing, and the other casing length being a fibrous casing.

26. The casing article as set forth in claims 24 or 25 in which a first of said casing lengths is a vinylidenechloride copolymer film tube

D-13,836

0 180 211

exhibiting the property of low oxygen permeability thereby to act as an oxygen barrier and a second of said casing lengths is a fibrous casing.

27. A composite shirred casing article, intended to be stuffed with a food product and subsequently processed in preparation for consumption, comprising a fibrous shirred casing length and a non-cellulosic shirred casing length arranged in tandem, one of said casing lengths being a cored high density casing length, said casing lengths forming a common bore of sufficient diameter to fit a stuffing horn, the non-cellulosic shirred casing length being rearmost and having an unshirred end within the bore of the fibrous casing length and joined to an unshirred end thereof for simultaneous deshirring upon stuffing, both casing lengths having sufficient extensibility to be stretched to the maximum circumference encountered during stuffing and processing without rupture, the fibrous casing length having sufficient shrinkability to control the uniformity of the diameter of the stuffed food product and maintain said stuffed food product under pressure after stuffing and during processing, the non-cellulosic shirred casing length having sufficient shrinkability to avoid wrinkling upon shrinkage of the fibrous casing length, whereby said composite shirred casing article is adapted to produce a tight unwrinkled stuffed food product.

28. The composite shirred casing article as set out in claim 27 wherein the film shirred

D-13,836

casing length includes means for causing said film
to adhere to the stuffed food product.

29.  The composite shirred casing article
as set out in claim 27 wherein said film shirred
casing length is a vinylidene chloride copolymer
film having a surface thereof adapted to provide
said surface with the property of adhesion to the
stuffed food product.

30.  The composite casing article as set
out in claim 27 wherein said film shirred casing
length is an oxygen barrier.

31.  The composite shirred casing article
as set out in claim 27 wherein said film shirred
casing length is a vinylidene chloride copolymer
film processed to possess the characteristic of low
oxygen permeability, thereby to provide an oxygen
barrier for the stuffed product.

32.  The composite shirred casing article
as set out in claim 27 wherein the film shirred
casing length is a moisture barrier.

33.  The composite shirred casing article
as set out in claim 32 wherein the film casing is
exterior to the fibrous casing on the stuffed food
product, thereby to protect the fibrous casing from
dehydration.

34.  The composite shirred casing article
as set out in claim 33 wherein the surface of the
fibrous casing length which is to be in contact with the stuffed food product includes means for enhancing peelability from the stuffed product.

35.    A composite article comprising at least two shirred casing lengths mounted on a continuous core, at least one of said lengths being a cored high density shirred casing length, at least one of said lengths being a foremost length having an unshirred end of each other length passed through the bore of said core and positioned proximate to an unshirred end of the foremost length so that all of said unshirred ends can be brought together for joining, whereby said article is adapted to be end joined, deshirred, and stuffed to form an encased product in a multi-layer composite casing.

36.    The casing article claimed in claim 35 wherein said unshirred ends are joined together to form a unitary casing and are thereby adapted to cause all casing lengths to deshirr upon stuffing.

37.    The casing article of claim 36 wherein said core is extended and flared to provide sizing means implanted within the mated unshirred casing ends proximate the joined ends.

38.    The casing article of claim 36 wherein said core is extended to provide mounting for sizing means implanted within the mated unshirred ends proximate the joined ends.

39.    The casing article of claim 37 wherein said foremost length comprises a shirred casing length on a core segment mounted on said continuous core.

D-13,836

40. The casing article of any of claims 35 to 38 which additionally includes extension means on said continuous core adapted to be cooperatively operated by tension control means of a stuffing machine.

41. The casing article of claim 39 which additionally includes extension means on said mounted core segment adapted to be cooperatively operated by tension control means of a stuffing machine.

42. A method of manufacturing a stuffed food product comprising the steps of placing at least two shirred casing lengths in tandem on a stuffing horn in such a way that the ends of the rearmost lengths are unshirred, passed through the bore of the foremost length, and combined with an unshirred end of the foremost length, at least one of said lengths being a cored high density shirred casing length; joining ends proximate the end of the stuffing horn; and forcing a stuffable food product through the stuffing horn to simultaneously deshirr and stuff the resulting composite casing.

43. The method of claim 42 wherein sizing means is inserted into said unshirred ends such that all of said unshirred ends pass over said sizing means before being joined proximate the end of the stuffing horn.

44. The method of claim 42 which additionally includes controlling the shape of the leading end of the stuffed product by deshirring a

D-13,836

predetermined length of casing and imposing a predetermined tension on all casing being deshirred from said casing lengths during stuffing.

45. The method of claim 42 which additionally includes controlling the shape of the trailing end of the stuffed product by deshirring a predetermined length of casing from each casing length and imposing a predetermined tension on all casing deshirred from said casing lengths.

46. The method of claim 42 which additionally includes controlling holdback force on said casing lengths during stuffing to provide a stuffed encased product of uniform diameter.

47. The method of any of claims 42 to 46 wherein the step of placing includes the step of putting one of said lengths on the stuffing horn with an unshirred end passed through its own bore.

48. The method of any of claims 42 to 46 comprising an additional step of matching the properties of the respective casing lengths to the required characteristics of the stuffed food product, such that the stuffing and subsequent processing create a stuffed food product within a tight wrinkle-free composite casing.

49. A method of manufacturing a stuffed product comprising the steps of providing a first shirred casing length having a single or multiple plies and having a characteristic property useful in a stuffing or processing operation for said food

D-13,836

product, providing a second shirred casing length having a single or multiple plies and a second characteristic property useful in a stuffing or processing operation for said food product, placing said casing lengths on a stuffing horn in tandem with an end of the rearmost length unshirred, one of said casing lengths being a cored high density shirred casing length, said unshirred length being passed through the bore of the foremost end and joined to an end of the foremost length proximate the end of the stuffing horn; stuffing a food product into the joined casings to produce a stuffed food product within a composite multi-layer casing.

50. The method of claim 49 wherein the step of providing a first shirred casing length includes providing a fibrous shirred casing length adapted to maintain the stuffed food product under pressure during stuffing and subsequent processing and the step of providing a second shirred casing length includes providing a film shirred casing length comprising an oxygen barrier.

51. The method of claim 50 wherein the step of providing a second shirred casing length includes providing a shirred polyvinylidene chloride casing length.

52. The method of claim 50 wherein the step of providing a second shirred casing length includes providing a shirred vinylidene chloride copolymer casing length having a property of low oxygen permeability, thereby to minimize oxygen penetration to the stuffed food product.

D-13,836

53. The method of claim 49 wherein the step of providing a first shirred casing length includes providing a fibrous shirred casing length adapted to maintain the stuffed food product under pressure during the stuffing and subsequent processing, and the step of providing a second shirred casing length includes providing a barrier film shirred casing length having a surface in contact with the stuffed food product adapted to adhere to said stuffed food product.

54. The method of claim 53 wherein the step of providing the second shirred casing length includes providing a vinylidene chloride copolymer film shirred casing length having a surface for contacting the food product, said surface being treated to comprise said surface as a means for adhering to the stuffed food product.

55. The method of claim 49 wherein the step of providing a first shirred casing length includes providing a fibrous shirred casing length adapted to maintain the stuffed food product under pressure during stuffing and subsequent processing, and the step of providing a second shirred casing length includes providing a film shirred casing length adapted to serve as a moisture barrier.

56. The method of claim 55 wherein the step of placing includes putting the film shirred casing length on the stuffing horn nearest the discharged end thereof so that the film shirred casing is external to the fibrous shirred casing length on the stuffed food product, thereby to protect the fibrous shirred casing length from dehydration during subsequent processing.

57. A method of manufacturing a stuffed food product comprising the steps of placing a pair of shirred casing sticks on the stuffing horn of a stuffing apparatus in tandem in such a way that an unshirred end of the rearmost casing stick is passed through the bore of the foremost casing stick and mated with an unshirred end of the foremost casing stick proximate the end of the stuffing horn, one of said casing sticks being a cored high density shirred casing stick, joining the mated ends together, stuffing a food product into the joined casings to simultaneously deshirr the two shirred casing sticks and form a contacting composite two layer casing, and closing the rear of the stuffed casing to form a food product encased in a double layered casing.

58. A method of manufacturing a stuffed food product comprising the steps of sheathing a pair of shirred casings onto a stuffing horn in tandem in such a way that the unshirred end of the rearmost casing is passed through the bore of the foremost casing, one of said casings being a cored high density shirred casing, releasing a stuffable product from the discharge end of the stuffing horn to simultaneously deshirr and stuff both casings, and closing the other end of the stuffed casing to form a stuffed product having a double layered casing.

D-13,836

59.   A method of manufacturing a stuffed food product comprising the steps of placing a shirred cellulosic casing stick and a shirred film casing stick on a stuffing horn of a stuffing apparatus, at least one of said sticks being a cored high density shirred casing stick, said sticks being mounted in tandem in such a way that an unshirred end of the rearmost casing is passed through the bore of the foremost casing and closed along with an unshirred end of the foremost casing, releasing a stuffable product from the discharge end of the stuffing horn to simultaneously deshirr and stuff both casings, and closing the other end of the stuffed casing to form a stuffed product within a double layered casing.

60.   A method of manufacturing a stuffed food product comprising the steps of placing a shirred cellulosic casing stick and a shirred film casing stick on the stuffing horn of a stuffing apparatus in tandem in such a way that an unshirred end of the film casing stick is placed through the bore of the cellulosic casing stick and closed along with the unshirred end of the cellulosic casing stick, at least one of said casing sticks being a cored high density casing stick, releasing a stuffable food product from the discharge end of the stuffing horn to simultaneously deshirr and stuff both casings, and closing the other end of the stuffed casing to form a stuffed food product within a double layered casing.

D-13,836

61. The method of claims 59 or 60 wherein the shirred film casing stick is a vinylidene chloride copolymer, and including steps of treating the surface of the vinylidene chloride copolymer film to provide the property of adhesion to the food product, and stuffing said casing sticks with the treated surface of vinylidene chloride copolymer film in contact with the food product for adhesion thereto.

62. The method as set out in claims 59 or 60 including the step of adapting said film to exhibit the characteristic of low oxygen permeability, thereby to provide said stuffed food product with an oxygen barrier.

63. The method of claim 61 wherein the shirred film casing stick comprises a vinylidene chloride copolymer having an oxygen transmission rate of less than 8cc per 100 inches squared per 24 hours per atmosphere.

64. The method of claims 59 or 60 including the step of adapting said film to exhibit the characteristic of low moisture permeability, thereby to provide said stuffed food product with a moisture barrier.

65. A method of manufacturing a stuffed food product comprising the steps of providing a cellulosic shirred casing length having a predetermined circumference and having extensibility and shrinkability properties for controlling the stuffed and processed circumference of a stuffed

D-13,836

food product, providing a non-cellulosic film shirred casing length having an additional property desirable for said stuffed food product, at least one of said casing lengths selected from the group consisting of said cellulosic shirred casing length and said film shirred casing length being a cored high density shirred casing length, sheathing said shirred casing lengths onto a stuffing horn in tandem with an unshirred end of the film casing length passed through the bore of the cellulosic casing length and closed along with an unshirred end of the cellulosic casing length, releasing a stuffable food product from the discharge end of the stuffing horn to simultaneously deshirr and stuff both casings, closing the other end of the stuffed casing to form a stuffed food product within a double layered casing, severing said stuffed food product from the shirred casing length, and processing said stuffed food product to produce a tight unwrinkled finished encased food product.

66. The method of claim 65 wherein the film casing is vinylidene chloride copolymer film and further comprising the steps of treating a surface of said vinylidene chloride copolymer film to provide thereto the property of adhesion to the food product, deshirring said vinylidene chloride copolymer film with the treated surface in contact with the stuffed food product, thereby to avoid formation of gelatin and fat at the surface of the stuffed food product.

D-13,836

67. The method of claim 65 wherein said film casing is vinylidene chloride copolymer film and further comprising the step of adapting said vinylidene chloride copolymer film to exhibit the characteristic of low oxygen permeability, thereby to provide the stuffed food product with an oxygen barrier.

68. The method of claim 65 further comprising the step of adapting the film casing length to exhibit the characteristic of low moisture permeability, thereby to provide the stuffed food product with a moisture barrier.

69. A method of manufacturing a composite casing article comprising the steps of providing two shirred casing lengths of different material and having different characteristics useful in a stuffing or processing operation for a food product, at least one of said casing lengths being a cored high density shirred casing length, passing an unshirred end of one casing length through a bore of the other casing length for joining with an unshirred end of said other casing length, and arranging said casing lengths in tandem to form a common bore of sufficient diameter to receive the stuffing horn.

70. A method of manufacturing a composite casing article comprising the steps of providing a first shirred casing length having a characteristic property useful in a stuffing or processing operation for a food product, providing a second shirring casing length having a second characteristic property useful in the stuffing or processing operation for the food product, at least one of said casing lengths being a cored high density shirred casing length, arranging said casing lengths in tandem, and passing an unshirred end of the rearmost length through the bore of the foremost length for joining with an unshirred end of the foremost length.

71. A method of manufacturing a stuffed food product comprising the steps of providing a cellulosic shirred casing length having a predetermined circumference and having extensibility and shrinkability properties for controlling the stuffed and processed circumference of a stuffed food product, providing a non-cellulosic shirred casing length having an additional property desirable for said stuffed food product, at least one of said casing lengths being a cored high density shirred casing length, arranging said lengths in tandem on a stuffing horn, releasing astuffable food product from the discharge end of said stuffing horn to simultaneously deshirr and stuff both casings, closing the other end of the stuffed casing to form a stuffed food product within a double layered casing, severing said stuffed food product from the shirred casing length, and processing said stuffed food product to produce a tight unwrinkled finished encased food product.

D-13,836

FIG.1

FIG.2

FIG.3

0 180 211

FIG.3A

FIG.3B

FIG.3C

FIG.3D

FIG.3E

0 180 211

# EUROPEAN SEARCH REPORT

**European Patent Office**

**0 180 211**

EP 85 11 3800

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 105 446 (UNION CARBIDE)<br><br>* Whole document * & US - A - 431 469 (Cat. D) | 1-6,8-15,17-36,38,42-71 | A 22 C 11/02 |
| Y | WO-A-8 403 926 (UNION CARBIDE)<br><br>* Page 9, lines 20-35 * | 1-6,8-15,17-36,38,42-71 | |
| A | DE-A-3 401 204 (HOECHST)<br><br>* Whole document * | 1,2,3,4,9,10,11,13,35,36,39,42,47,49 | TECHNICAL FIELDS SEARCHED (Int. Cl.4) |
| A | | 59,69,70 | A 22 C |
| A | GB-A-2 075 459 (UNION CARBIDE)<br><br>* Page 5, lines 6-15 *<br><br>--- -/- | 7,16,37,40,41 | |

The present search report has been drawn up for all claims

| Place of search | Date of completion of the search | Examiner |
|---|---|---|
| THE HAGUE | 31-01-1986 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 092 131 (HOECHST)<br><br>* Figure 4; page 14, lines 1-15 * | 7,16,<br>40,41 | |
| A,P | EP-A-0 126 474 (UNION CARBIDE)<br>* Claim 31 * & US - A - 495 332<br>(Cat. D) | 37 | |
| A,D | DE-A-3 012 622 (WITZLEBEN) | | |

TECHNICAL FIELDS
SEARCHED (Int. Cl.4)

The present search report has been drawn up for all claims

| Place of search<br>THE HAGUE | Date of completion of the search<br>31-01-1986 | Examiner<br>DE LAMEILLIEURE D. |
|---|---|---|